⑲ 🌀 Europäisches Patentamt

European Patent Office

Office européen des brevets

(11) Veröffentlichungsnummer: **0 185 414**
**B1**

(12) **EUROPÄISCHE PATENTSCHRIFT**

(45) Veröffentlichungstag der Patentschrift: **30.01.91**

(21) Anmeldenummer: **85201943.9**

(22) Anmeldetag: **25.11.85**

(51) Int. Cl.⁵: **H 04 B 1/16**

(54) FM-Stereoempfänger.

(30) Priorität: **18.12.84 DE 3446078**

(43) Veröffentlichungstag der Anmeldung:
**25.06.86 Patentblatt 86/26**

(45) Bekanntmachung des Hinweises auf die
Patenterteilung:
**30.01.91 Patentblatt 91/05**

(84) Benannte Vertragsstaaten:
**DE FR GB**

(56) Entgegenhaltungen:
**EP-A-0 088 467**
**GB-A-2 043 406**
**US-A-4 293 818**
**US-A-4 403 113**

**PATENT ABSTRACTS OF JAPAN, Band 1, Nr. 58,
6. Juni 1977, Seite 76 E 77; & JP-A-52 2302
(SONY K.K.) 1.10.1977**

(73) Patentinhaber: **Philips Patentverwaltung GmbH
Wendenstrasse 35 Postfach 10 51 49
D-2000 Hamburg 1 (DE)**
㉝ **DE**

(73) Patentinhaber: **N.V. Philips'
Gloeilampenfabrieken
Groenewoudseweg 1
NL-5621 BA Eindhoven (NL)**
㉝ **FR GB**

(72) Erfinder: **Jansen, Winfried
Blütenweg 29
D-2081 Ellerbek (DE)**
Erfinder: **Nolde, Wolfgang, Dr.
Im Ginsterbusch 5
D-2000 Hamburg 61 (DE)**

(74) Vertreter: **Hartmann, Heinrich, Dipl.-Ing. et al
Philips Patentverwaltung GmbH Wendenstrasse
35 Postfach 10 51 49
D-2000 Hamburg 1 (DE)**

Courier Press, Leamington Spa, England.

EP 0 185 414 B1

**Beschreibung**

Die Erfindung betrifft einen FM-Stereoempfänger mit einer Mischstufe, in der ein Eingangssignal mit dem Signal eines ersten in der Frequenz elektrisch steuerbaren Oszillators gemischt wird, einem FM-Demodulator, der das in den Zwischenfrequenzbereich umgesetzte Eingangssignal demoduliert und einer Schaltung zur Wiedergewinnung des in dem Eingangssignal enthaltenen Pilotsignals.

Im allgemeinen haben derartige Empfänger eine Zwischenfrequenz von 10,7 MHz. Jedoch gibt es auch FM-Empfänger mit einer sehr niedrigen Zwischenfrequenz (z.B. 80 kHz), die in der Größenordnung der Frequenz des Pilotsignals ist. Ein Vorteil eines Empfängers mit einer derart niedrigen Zwischenfrequenz ist die Möglichkeit, den gesamten Empfänger weitgehend mit einer einzigen integrierten Schaltung zu realisieren. Ein Nachteil der niedrigen Zwischenfrequenz besteht jedoch darin, daß sich Empfangsstörungen ergeben, wenn eine solche Schaltung als Stereoempfänger ausgestaltet wird und damit Stereosignale empfangen werden sollen.

Aufgabe der vorliegenden Erfindung ist es, eine Schaltungsanordnung der eingangs genannten Art so auszugestalten, daß derartige Empfangsstörungen auch bei niedrigen Zwischenfrequenzen weitgehend unterdrückt werden.

Diese Aufgabe wird durch die im kennzeichnenden Teil des Anspruchs 1 angegebenen Maßnahmen gelöst.

Untersuchungen, die zu der Erfindung geführt haben, haben ergeben, daß am Ausgang eines FM-Empfängers der eingangs genannten Art Störkomponenten auftreten, deren Abstand von der Zwischenfrequenz sowie von der doppelten Zwischenfrequenz einem ganzzahligen Vielfachen der Pilotsignalfrequenz entspricht, wobei die Amplitude der Störkomponente um so geringer ist, je größer der erwähnte Frequenzabstand ist. Bei FM-Stereoempfängern mit hoher Zwischenfrequenz liegen diese Komponenten sehr weit außerhalb des Niederfrequenz-Nutzsignalbereiches und stören daher nicht. Bei Zwischenfrequenzen von z.B. 80 kHz hingegen reichen diese Seitenbänder bis in den Nutzsignalbereich hinein, d.h. bis in den Bereich des auf den Hilfsträger (38 kHz) modulierten Differenzsignals. In diesem Fall machen sich die Störkomponenten bei der Wiedergabe störend bemerkbar.

Nach der Erfindung werden diese Störkomponenten nun dadurch verringert, daß eine Schleife mit negativer Schleifenverstärkung für die Frequenz des Pilotsignals gebildet wird. Dadurch liefert der Oszillator ein Ausgangssignal, das - ebenso wie das der Mischstufe zugeführte Eingangssignal - durch das Pilotsignal frequenzmoduliert ist. Bei einer negativen Schleifenverstärkung wird dann die im Eingangssignal enthaltene, auf das Pilotsignal zurückgehende Frequenzmodulation zum Teil durch die im Oszillatorausgangssignal enthaltene Frequenzmodulation kompensiert, wodurch die Störungen deutlich reduziert werden.

Die Erfindung ist nicht nur bei solchen FM-Stereoempfängern anwendbar, die eine niedrige Zwischenfrequenz haben, sondern grundsätzlich bei allen FM-Empfängern, bei denen das Pilotsignal Störungen hervorruft.

So ist beispielsweise in der DE-PS 20 52 098 eine Störaustastschaltung beschrieben, bei der im Signalweg ein durch einen Störungsdetektor steuerbarer Schalter angeordnet ist, der im Falle einer Störung geöffnet wird, wobei der Momentanwert des Signals unmittelbar vor der Störung in einem mit dem Schalter gekoppelten Kondensator gespeichert wird. Bei einer solchen Störaustastschaltung ergeben sich durch das Pilotsignal wiederum die Störungen, die bei der bekannten Schaltung mittels eines Parallel Resonanzkreises beseitigt werden müssen. Bei Anwendung der Erfindung ist ein solcher Parallel-Resonanzkreis überflüssig.

Auch aus der DE-OS 27 39 668 ist ein Empfänger bekannt, bei dem der Empfang durch das Pilotsignal gestört wird und der deshalb eine Schaltung zum Ausfiltern bzw. Kompensieren des Pilotsignals enthält Auch diese Kompensations bzw. Filterschaltung kann entfallen, wenn gemäß der Erfindung das pilotsignal schon vor dem FM-Demodulator reduziert wird.

Die Erfindung wird nachstehend anhand der Zeichnung näher erläutert. Es zeigen:

Fig. 1 ein Blockschaltbild eines erfindungsgemäßen Empfängers und

Fig. 2 das Frequenzspektrum, das sich bei einem derartigen Empfänger ergeben würde, wenn die Erfindung nicht vorhanden wäre.

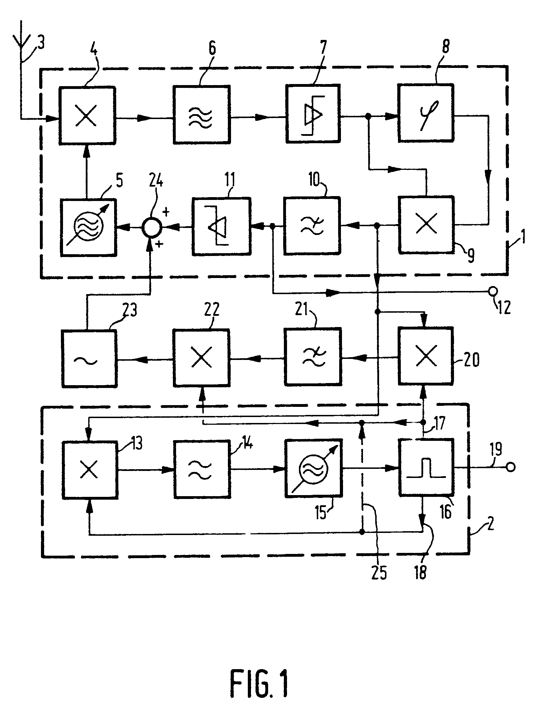

Fig. 1 zeigt den wesentlichen Teil eines FM-Stereoempfängers mit einem Empfangsteil 1, einer Schaltung 2 zur Wiedergewinnung des Pilotsignals und einem Schaltungsteil zur Reduzierung des Pilotsignals in dem empfangenen Signal. Der Empfangsteil 1 ist an sich bekannt, z.B. aus der von der Firma Valvo herausgegebenen Technischen Information TI 840217 "Die integrierte Empfängerschaltung TDA7000" bzw. EP-A-0088467 Dabei wird von einer Antenne 3 einer Mischstufe 4 ein Eingangssignal zugeführt und darin mit dem Ausgangssignal eines ersten Oszillators 5 mit elektronisch steuerbarer Frequenz gemischt. Das Ausgangssignal der Mischstufe 4 wird über einen ZF-Verstärker 6 einem Begrenzerverstärker 7 zugeführt, der in einem großen Eingangs-Spannungsbereich eine ZF-Spannung konstanter Amplitude abgibt und durch dessen Wirkung eine eventuell vorhandene Störamplitudenmodulation des ZF-Signals weitgehend unterdrück wird. Das Ausgangssignal des Begrenzerverstärkers wird in einem als Quadraturdemodulator ausgebildeten FM-Demodulator demoduliert, der einen frequenzabhängigen Phasenschieber 8 und eine Multiplizierstufe 9 umfaßt. Das Ausgangssignal des Begrenzerverstärkers wird der Multiplizierstufe 9 einerseits direkt und andererseits über den frequenzabhängigen Phasenschieber 8 zugeführt, der so ausgelegt ist, daß er bei der Zwischenfrequenz z.B. 80 kHz eine Phasendrehung von 90° erzeugt. Das Ausgangssignal der Mischstufe wird über einen Tiefpaß 10 mit einer Grenzfrequenz von wenigen kHz und einem weiteren Begrenzerverstärker 11 dem Steuereingang des ersten Oszillators 5 zugeführt.

Die Elemente 4 bis 11 bilden eine Schleife, die in einem von der oberen Grenzfrequenz des Tiefpasses 10 abhängigen Frequenzbereich eine negative Schleifenverstärkung in der Größenordnung von 4 oder 5 aufweist. Es ergibt sich somit eine dynamische Gegenkopplung, durch die der Frequenzhub des Eingangssignals komprimiert wird, so daß einerseits durch die niedrige Zwischenfrequenz von 80 kHz keine Beschneidung des Übertragungsbandes erfolgt und andererseits eine statische Gegenkopplung bewirkt wird, durch die die mittlere Oszillatorfrequenz einen solchen Wert annimmt, daß der zeitliche Mittelwert der Frequenz des Ausgangssignals der Mischstufe 4 derjenigen Frequenz entspricht, bei der der Phasenschieber 8 eine Phasendrehung von etwa 90° erzeugt. Das Niederfrequenz-Ausgangssignal wird am Ausgang des Tiefpasses 10 abgenommen und einer Ausgangsklemme 12 zugeführt.

Das Ausgangssignal der einen Teil des FM-Demodulators bildenden Multiplizierstufe 9 wird dem Eingang der Schaltung 2 zur Wiedergewinnung des Pilotsignals zugeführt; grundsätzlich könnte aber auch das Ausgangssignal des Tiefpasses 10 zu diesem Zweck herangezogen werden. Die Schaltung 2 enthält eine Misch- bzw. eine Multiplizierstufe 13, in der das Ausgangssignal der Stufe 9 mit einem 19kHz-Rechtecksignal gemischt wird. Ein der Mischstufe 13 nachgeschalteter Tiefpaß 14 unterdrückt die sich bei dem Misch- bzw. Multipliziervorgang ergebenden Mischprodukte mit der Summenfrequenz und läßt nur solche mit der Differenzfrequenz durch, die dem Steuereingang eines zweiten elektronisch in der Frequenz steuerbaren Oszillators zugeführt werden, der ein Ausgangssignal mit einer Frequenz von 76 kHz liefert. Dieses Ausgangssignal wird in einer Schaltung 16 in der Frequenz geteilt und geformt. Die Schaltung 16 liefert an einem ersten Ausgang 17 ein erstes 19kHz Rechtecksignal, an einem zweiten Ausgang 18 ein demgegenüber um 90° in der Phase gedrehtes zweites 19kHz Rechtecksignal und an einem dritten Ausgang 19 ein 38kHz Signal, dessen positive Flanken mit den Nulldurchgängen des 19kHz-Rechtecksignals am ersten Ausgang 17 zusammenfallen und das zur Dekodierung des Stereosignals verwendet wird. Das zweite 19kHz-Signal am Ausgang 18 wird einem zweiten Eingang der Mischstufe 13 zugeführt und in dieser, wie bereits erwähnt, mit dem Ausgangssignal der Multiplizierschaltung 9 gemischt. Da das der Mischstufe 13 nachgeschaltete Tiefpaßfilter 14 so bemessen ist, daß nur die Mischprodukte durchgelassen werden, die sich aus der Mischung des 19 kHz Signals mit dem im Ausgangssignal der Multiplizierstufe 9 enthaltenen Pilotsignal ergeben, hängt das Ausgangssignal des Oszillators 15 nur von der Phasendifferenz zwischen dem Pilotsignal und dem Signal am Ausgang 18 ab. Im stationären Zustand teilt sie sich so ein, daß zwischen den beiden genannten Signalen eine phasendifferenz von genau 90° besteht, bei der das Ausgangssignal des Tiefpasses 14 Null ist.

Die Aufbereitung des auf den Hilfsträger modulierten. Differenzsignals ist in der Zeichnung nicht näher dargestellt. Sie kann so erfolgen, wie in der EP-A-0088 467 beschrieben.

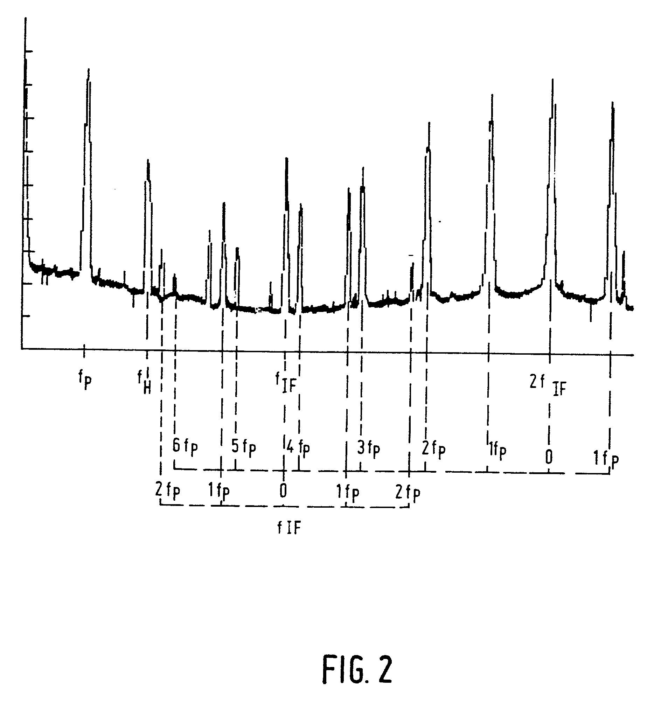

In Fig. 2 ist das Frequenzspektrum dargestellt, das sich am Ausgang 12 ergeben würde, wenn das Antenneneingangssignal nur mit dem pilotsignal moduliert und die noch zu beschreibende erfindungsgemäße Schaltung nicht vorhanden wäre. Man erkennt eine Reihe von Störkomponenten. Eine genauere Analyse zeigt, daß es eine erste Gruppe von Störkomponenten gibt, deren Frequenzabstand von dem doppelten, Wert der Zwischenfrequenz $f_{IF}$ einem ganzzahligen Vielfachen der Frequenz $f_p$ des Pilotsignals entspricht. Diese Gruppe von Störungen ist Prinzipiell durch den Quadraturdemodulator bedingt, Außerdem gibt es eine zweite Gruppe von Störkomponenten, deren Frequenzabstand von der Zwischenfrequenz $f_{IF}$ jeweils einem ganzzahligen Vielfachen der Frequenz $f_p$ des Pilotsignals entsprechen und die durch die endliche ZF-Unterdrückung des ZF-Demodulators bedingt sind.

Wie sich aus dem Diagramm ergibt, reichen die Störkomponenten bis in den Frequenzbereich um den Hilfsträger $f_H$ hinein, in dem sich die Seitenbänder des sogenannten Differenzsignals befinden. Bei der Dekodierung des Stereosignals werden daher einige dieser Komponenten störend hörbar. Diese Komponenten werden durch die Erfindung zumindest teilweise unterdrückt.

Die Schaltung zur Unterdrückung der Störkomponenten enthält eine Multiplizierstufe 20, die den gleichen Aufbau haben kann wie die Stufen 4, 9 und 13. Der eine Eingang der Multiplizierstufe 20 ist mit dem Ausgang 17 der Schaltung 16 verbunden und der andere Eingang mit dem Ausgang des FM-Demodulators 8, 9, d.h, aber auch mit dem Eingang der PLL-Schaltung 20. Die den beiden Eingängen der Multiplizierstufe 20 zugeführten Eingangssignale haben daher entweder die gleiche oder die entgegengesetzte Phasenlage, so daß in dem Ausgangssignal dieser Stufe ein Gleichanteil vorhanden ist und ein Wechselanteil mit der doppelten Frequenz des Pilotsignals, der mittels eines Tiefpaßfilters 21 unterdrückt wird.

Das Tiefpaßfilter 21 verbindet den Ausgang der Multiplizierstufe 20 mit einem Eingang einer weiteren Multiplizierstufe 22. An diesem Eingang liegt somit der von der Stufe 20 gelieferte Gleichanteil, der der Amplitude des Pilotsignals am Ausgang des FM-Demodulators 8, 9 proportional ist. Der andere Eingang der Multiplizierstufe 22 ist mit dem Ausgang 17 der Schaltung 16 verbunden, an dem ein 19kHz Signal anliegt, das in Phase mit dem Pilotsignal am Ausgang des FM-Demodulators 8, 9 ist. Am Ausgang der Multiplizierstufe 22 erscheint daher ein 19kHz-Signal, dessen Amplitude dem Gleichanteil am Ausgang des Tiefpasses 21, d.h. aber der Amplitude des Pilotsignals am Ausgang des FM-Demodulators 8, 9 proportional ist.

Dieses 19kHz-Rechtecksignal wird durch eine Stufe 23 in ein zumindest annähernd sinusförmiges Signal mit gleicher Frequenz und Phase umgesetzt. Diese Stufe, die auch in der Verbindungsleitung zwischen der Multiplizierstufe 22 und dem Ausgang 17 angeordnet sein könnte, kann beispielsweise geeignete Filter enthalten, die die Oberwellen des Rechtecksignals unterdrücken. Die Schaltung 23 kann entfallen, wenn das 19kHz-Signal von einer Schaltung geliefert wird, die aus verschiedenen Dreiecksignalen eine nahezu sinusförmige Schwingung synthetisiert, wie dies aus der DE-OS 33 11 072 bekannt ist. Wesentlich ist in all diesen Fällen nur, daß ein von Oberwellen weitgehend freies 19kHz-Signal zur Verfügung steht, dessen Amplitude proportional zur Amplitude des Pilotsignals am Ausgang des FM-Demodulators ist und daß zwischen diesen Signalen eine feste Phasenbeziehung besteht.

Das Ausgangssignal der Stufe 23 wird in einer Addierstufe 24 dem Ausgangssignal des Begrenzerverstärkers 11 überlagert und das Summensignal wird dem Steuereingang des ersten in der Frequenz steuerbaren Oszillators 5 zugeführt. Wenn das der Addierstufe 24 zugeführte Signal eine solche Phasenlage hat, das sich eine Schleife mit negativer Schleifenverstärkung ergibt - in diesem Fall ist das Ausgangssignal des Oszillators 5 durch das 19kHz-Signal in gleicher Weise in der Frequenz moduliert wie das Antennensignal durch das Pilotsignal -, dann ergibt sich am Ausgang der Mischstufe ein Zwischenfrequenzsignal mit im Vergleich zum Eingangssignal wesentlich herabgesetzter Frequenzmodulation durch das Pilotsignal. Da somit am Eingang des FM-Demodulators 8, 9 ein Signal zur Verfügung steht, das nur noch schwach durch das Pilotsignal frequenzmoduliert ist, werden die dadurch hervorgerufenen Störkomponenten am Ausgang 12 wesentlich reduziert.

Die Ausgangssignale der PLL-Schaltung 2 sind von der Amplitude des im Antennensignal enthaltenen Pilotsignals weitgehend unabhängig. Würde man das Ausgangssignal dieser Schaltung der Addierschaltung 24 direkt zuführen, dann wäre die Schleifenverstärkung in der durch die Blöcke 4, 6...9, 2, 24, 5 gebildeten Schleife nicht konstant. Diesen unerwünschten Effekt verhindert die Multiplizierstufe 22, in der das Ausgangssignal der Schaltung 2 mit einem der Pilotsignalamplitude am Ausgang des FM-Demodulators proportionalen Wert multipliziert wird, so daß die Amplitude des Ausgangssignals der Multiplizierstufe 22 der Amplitude des Pilotsignals proportional und die Schleifenverstärkung für das Pilotsignal konstant ist.

Die selektiven Bauelemente in der Schleife, insbesondere das Zwischenfrequenzfilter 6, bewirken, daß das Pilotsignal am Ausgang des FM-Demodulators gegenüber dem im Antennen-Eingangssignal in Form einer Modulation enthaltenen Pilotsignal in der Phase verschoben wird. Diese Phasenverschiebung muß wieder ausgeglichen werden, damit sich eine negative Schleifenverstärkung ergibt. Dazu könnte ein geeignetes Phasendrehglied in der Schleife beispielsweise zwischen der PLL-Schaltung 2 und dem Eingang der Multiplizierstufe 22 vorgesehen sein. Die erwünschte Phasenverschiebung läßt sich aber auch dadurch erreichen, daß dem Eingang der Multiplizierstufe 22 außer dem 19kHz-Rechtecksignal am Ausgang 17 der Schaltung 16 noch ein Anteil des demgegenüber um 90° versetzten 19kHz-Rechtecksignals am Ausgang 18 zugeführt wird, wie dies durch die gestrichelte Linie 25 angedeutet ist, Es läßt sich nämlich zeigen, daß sich aus der gewichteten Summe zweier um 90° gegeneinander versetzter, gegebenenfalls auch noch invertierter Signale ein Überlagerungssignal mit einer beliebigen Phasenverschiebung erzeugen läßt.

Die durch das Pilotsignal hervorgerufenen Störkomponenten werden um so besser unterdrückt, je höher die Schleifenverstärkung ist; bei einer unendlichen Schleifenverstärkung würden sie vollständig unterdrückt. Aufgrund von Fertigungsstreuungen ergeben sich in den einzelnen Empfängern jedoch unterschiedliche Verzögerungen bzw. Laufzeiten, was zur Folge hat, daß sich bei dem betreffenden Empfänger eine endliche Schleifenverstärkung ergibt, wenn nicht noch ein individueller Abgleich erfolgen würde, In der Praxis ist es daher günstiger, eine Schleifenverstärkung zwischen 10 und 100 zu wählen, die sich leicht unabhängig von Fertigungsstreuungen und ohne zusätzlichen Abgleich einstellen läßt. Die Störkomponenten werden dann zwar nicht mehr vollständig, aber zumindest um 20 bis 40 dB unterdrückt, was in den meisten Fällen ausreicht.

Vorstehend wurde die Erfindung anhand eines Empfängers mit niedriger Zwischenfrequenz beschrieben. Die Erfindung ist jedoch auch in all den Fällen anwendbar, in denen durch ein im Eingangssignal in Form einer Frequenzmodulation enthaltenes Pilotsignal Störungen hervorgerufen werden, z.B. bei dem FM-Empfänger nach dem DE-PS 20 52 098 bzw EP-A-0088467 bei dem durch Anwendung der Erfindung die Störaustastschaltung wesentlich einfacher aufgebaut sein könnte.

**Patentansprüche**

1. FM-Stereoempfänger mit einer Mischstufe (4), in der ein Eingangssignal mit dem Signal eines ersten in der Frequenz elektrisch steuerbaren Oszillators (5) gemischt wird, einem FM-Demodulator (8,9), der das in den Zwischenfrequenzbereich umgesetzte Eingangssignal demoduliert und einer Schaltung (2) zur Wiedergewinnung des in dem Eingangssignal enthaltenen Pilotsignals, gekennzeichnet durch eine zur wenigstens teilweisen Unterdrückung von durch das Pilotsignal hergerufenen Störungen dienende Schleife mit negativer Schleifenverstärkung für die Frequenz des pilotsignals, bestehend aus der Mischstufe (4), dem FM-Demodulator (8, 9), der Schaltung (2) zur Aufbereitung de Pilotsignals und dem ersten Oszillator.

2. FM-Stereoempfänger nach Anspruch 1, dadurch gekennzeichnet, daß die Schaltung zur Wiedergewinnung des Pilotsignals einen zweiten in der Frequenz elektrisch steuerbaren Oszillator (15) enthält, aus dessen Ausgangssignal ein Pilotsignal abgeleitet ist, das über ein Übertragungsglied (22) mit linear in Abhängigkeit von der Pilotsignalamplitude gesteuerten Übertragungs-faktor dem Steuereingang des ersten Oszillators (5) zugeführt ist.

3. FM-Stereoempfänger nach einem der vorhergehenden Ansprüche, dadurch gekennzeichnet, daß die Schaltung zur Wiedergewinnung des Pilotsignals mit dem Steuereingang des ersten Oszillators über eine Schaltung (23) zur Unterdrückung der Oberwellen verbunden ist.

4. FM-Stereoempfänger nach einem der Ansprüche 1 bis 3, dadurch gekennzeichnet, daß das Niederfrequenzausgangssignal ebenfalls dem Steuereingang des ersten Oszillators (5) zugeführt ist.

**Revendications**

1. Récepteur FM stéréo comportant un étage mélangeur (4), dans lequel un signal d'entrée est mélangé avec le signal d'un premier oscillateur (5) pouvant être commandé électriquement en fréquence, un démodulateur FM (8, 9), qui démodule le signal d'entrée converti dans le domaine de fréquence intermédiaire, et un circuit (2) pour la récupération du signal pilote contenu dans le signal d'entrée, caractérisé par une boucle à amplification de boucle négative pour la fréquence du signal pilote, servant à supprimer, au moins partiellement, les perturbations causées par le signal pilote et constituée de l'étage mélangeur (4), du démodulateur FM (8, 9), du circuit (2) pour la préparation du signal pilote et du premier oscillateur (5).

2. Récepteur FM stéréo suivant la revendication 1, caractérisé en ce que le circuit pour la récupération du signal pilote contient un deuxième oscillateur (15) pouvant être commandé électriquement en fréquence, du signal de sortie duquel est dérivé un signal pilote qui est appliqué, par l'intermédiaire d'un élément de transmission (22) à facteur de transmission commandé suivant une fonction linéaire de l'amplitude du signal pilote, à l'entrée de commande du premier oscillateur (5).

3. Récepteur FM stéréo suivant l'une quelconque des revendications précédentes, caractérisé en ce que le circuit pour la récupération du signal pilote est connecté à l'entrée de commande du premier oscillateur, par l'intermédiaire d'un circuit (23) pour la suppression des harmoniques.

4. Récepteur FM stéréo suivant l'une quelconque des revendications 1 à 3, caractérisé en ce que le signal de sortie de basse fréquence est également appliqué à l'entrée de commande du premier oscillateur (5).

**Claims**

1. An FM stereo receiver including a mixer stage (4) in which an input signal is mixed with the signal of a first oscillator (5), which is electrically controllable in frequency, an FM demodulator (8, 9) demodulating the input signal converted in the intermediate frequency range and a circuit (2) for recovering the pilot signal contained in the input signal, characterized by a loop having a negative loop gain for the frequency of the pilot signal for at least partially suppressing interferences caused by the pilot signal, comprising the mixer stage (4), the FM-demodulator (8, 9), the circuit (2) for processing the pilot signal and the first oscillator.

2. An FM stereo receiver as claimed in Claim 1, characterized in that for recovering the pilot signal the circuit incorporates a second oscillator (15) which is electrically controllable in frequency, from whose output signal a pilot signal is derived which is applied to the control input of the first oscillator (5) via a transfer element (22) having a transfer factor which is linearly controlled in dependence on the pilot signal amplitude.

3. An FM stereo receiver as claimed in anyone of the preceding Claims, characterized in that the circuit for recovering the pilot signal is connected to the control input of the first oscillator via a circuit (23) for suppressing the harmonics.

4. An FM stereo receiver as claimed in anyone of Claims 1 to 3, characterized in that the low-frequency output signal is also applied to the control input of the first oscillator (5).

FIG.1

FIG. 2